# EUROPEAN PATENT APPLICATION

(11) **EP 4 796 324 A1**
(43) Date of publication of application: **26.08.2026**
(21) Application number: 26156084.1
(22) Date of filing: 03.02.2026
(51) Int. Cl.: B41F 33/00, G06T 7/00, B41J 29/393

(54) **INSPECTION SYSTEM**

(30) Priority: 20.02.2025 JP 2025025754
(71) Applicant: Canon Kabushiki Kaisha, Tokyo, 146-8501 (JP)
(72) Inventor: AZUMA, Erika, Tokyo, 146-8501 (JP)
(74) Representative: Canon Europe Limited

(57) **Abstract**

The present disclosure relates to an inspection system for printed products that include at least two sets of sheets, each set constituting a repeating unit of sheets, and includes at least a piece of content. The inspection system includes a first setting unit configured to set inspection areas to respective reference images included in a first reference image group of a first set, and a second setting unit configured to set the inspection areas set by the first setting unit to respective reference images included in a second reference image group of a second set, the second reference image group including a layout of contents common to the first reference image group and differing in image-related contents.

## Description

### Technical Field

The present disclosure relates to an inspection system.

### BACKGROUND

Conventionally, an inspection (quality check) to check whether printed products are properly printed has been executed by hand. However, an apparatus which automatically executes the inspection as post-processing after printing by a printing machine has recently been used. There is a case where an inspection apparatus executes an inspection of a variable data printing (VDP) job for variable character strings and bar codes. Because a layout of contents included in print data processed by the VDP job is the same, reference images and inspection areas for only one set are registered. A method for repeatedly utilizing both registered reference images and inspection areas for one set is described in Japanese Patent Laid-Open No. 2023-143971.

In an inspection that repeatedly uses a set of reference images and inspection regions, when an inspection is performed on a print job having a plurality of the sets, which share a content layout but differ in a content image pattern and each of which is a repeating unit, there is a possibility that the inspection cannot be performed correctly.

### SUMMARY

The present disclosure in its first aspect provides an inspection system as specified in claim 1. Optional features are specified in claims 2 to 11.

Features of the present disclosure will become apparent from the following description of embodiments with reference to the attached drawings. The following description of embodiments is described by way of example.

### BRIEF DESCRIPTION OF THE DRAWINGS

Fig. 1 is a schematic diagram illustrating a configuration of an inspection system including an information processing apparatus, an inspection apparatus, and an image forming apparatus.
Fig. 2 is a block diagram illustrating a control configuration including the image forming apparatus, an inspection unit, a large-capacity stacker, a client personal computer (PC), the information processing apparatus, and the inspection apparatus.
Fig. 3 is a block diagram illustrating a software configuration.
Fig. 4 is a diagram illustrating an example of a job property screen.
Fig. 5 is a flowchart illustrating an example of inspection processing that is executed by the information processing apparatus.
Fig. 6 is a flowchart illustrating an example of processing that is executed by the inspection apparatus when an inspection setting is registered.
Fig. 7 is a diagram illustrating an example of a user interface (UI) screen for an inspection setting.
Fig. 8 is a flowchart illustrating an example of a procedure of inspection processing that is executed by the inspection apparatus.
Fig. 9 is a flowchart illustrating an example of a procedure of inspection processing that is executed with an inspection setting.
Figs. 10A to 10C are diagrams each illustrating an example of a UI screen for an inspection setting.
Figs. 11A and 11B are flowcharts illustrating an example of the inspection processing that is executed by the inspection apparatus.
Fig. 12 is a flowchart illustrating an example of inspection processing that is executed by the inspection apparatus.
Figs. 13A and 13B are flowcharts illustrating an example of inspection processing executed by the inspection apparatus.

### DESCRIPTION OF THE EMBODIMENTS

The embodiments of the present disclosure will be described in detail with reference to the accompanying drawings. It should be noted that the following embodiments are not intended to limit the disclosure according to the claims, and not all combinations of features described in the embodiments are necessarily essential for solving the issue. As long as the functions according to the present embodiment are realized, the apparatus may be a single device or an inspection apparatus including multiple devices. Furthermore, unless otherwise specified, the inspection apparatus may be connected via a network, such as a Local Area Network (LAN) or a Wide Area Network (WAN), and perform processing as long as the functions of the present embodiment are realized. In other words, the system configuration in which various terminals described in the following embodiments are connected is merely an example, and various configuration examples may be adopted depending on the application or purpose.

### <First Embodiment>

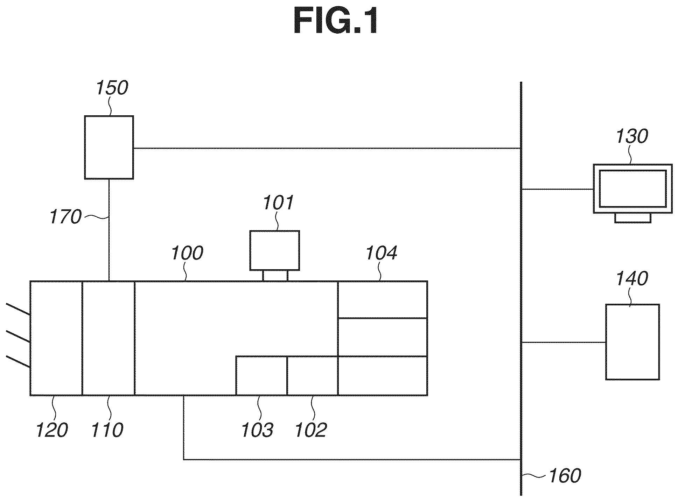

Fig. 1 is a diagram illustrating a configuration of an inspection system including an inspection apparatus according to a first embodiment of the present disclosure. The inspection system includes an image forming apparatus 100, an inspection unit 110, a large-capacity stacker 120, a client personal computer (PC) 130, an information processing apparatus 140, an inspection apparatus 150, a network 160, and a communication cable 170.

The image forming apparatus 100 includes a user interface (UI) unit 101 and sheet feeding decks 102 and 103. Further, an option deck 104 including three sheet feeding decks is connected to the image forming apparatus 100. Recording sheets, such as print sheets, can be set to each of the decks. The image forming apparatus 100 executes print output processing based on various types of input data, such as print data transmitted from the client PC 130 and the information processing apparatus 140. The image forming apparatus 100 further includes the inspection unit 110 and the large-capacity stacker 120, and the image forming apparatus 100 is connected to the inspection unit 110 and the large-capacity stacker 120 via a communication cable serving as an internal bus.

The inspection unit 110 receives printed products output from the image forming apparatus 100 and acquires image data to be used for an inspection of the received printed products to determine the presence or absence of defective images. Herein, the term "defective images" refers to images which cause deterioration of quality of the printed products. Examples of defective images include a round-shape defective image (spot) caused by coloring material adhering to an unintended location during printing, a missing color area caused by insufficient adhesion of coloring material to an intended location, and a linear defective image (streak). The inspection unit 110 transmits the acquired image data to the inspection apparatus 150, which will be described below, via the communication cable 170. Then, the inspection apparatus 150 inspects for the presence or absence of defective images in the printed products, and the inspection unit 110 acquires the inspection result from the inspection apparatus 150.

The large-capacity stacker 120 includes a main tray and a top tray, and the main tray can stack several thousand sheets at a time. The large-capacity stacker 120 receives output sheets inspected by the inspection unit 110 and can change a discharge destination based on the inspection result acquired by the inspection unit 110.

The image forming apparatus 100 is connected to the client PC 130, the information processing apparatus 140, and the inspection apparatus 150 via the network 160 to enable communication with each other. While the inspection is executed by the inspection apparatus 150 in the present embodiment, the present disclosure is not limited to the present embodiment. The present disclosure is also applicable to an in-line inspection apparatus that executes image formation, inspection, post-processing, and discharge operations in an integrated manner.

A print job is generated by the client PC 130, transmitted to the information processing apparatus 140 via the network 160, and managed by the information processing apparatus 140. Then, the print job is transmitted to the image forming apparatus 100 from the information processing apparatus 140 via the network 160, and the image forming apparatus 100 executes processing to print on sheets. The print job may be generated and managed by the information processing apparatus 140, transmitted to the image forming apparatus 100 via the network 160, and managed by the image forming apparatus 100.

The client PC 130, the information processing apparatus 140, and the inspection apparatus 150 may be connected to the image forming apparatus 100 via a communication cable to enable communication with each other. In other words, a connection mode for connecting the image forming apparatus 100, the information processing apparatus 140, and the client PC 130 to each other described in the present embodiment is merely an example, and various connection modes other than the connection mode described in the present embodiment can be employed. In addition to the inspection unit 110 and the large-capacity stacker 120, a finisher capable of executing stapling, a folding apparatus, and a bookbinding apparatus may also be connected to the image forming apparatus 100.

### <Hardware Block Diagram>

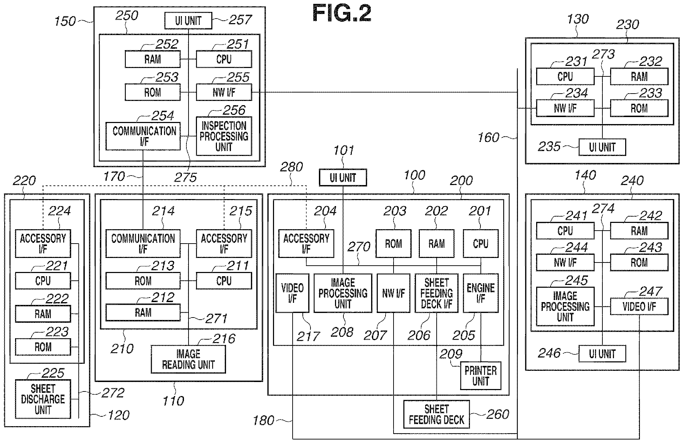

Fig. 2 is a block diagram illustrating a control configuration including the image forming apparatus 100, the inspection unit 110, the large-capacity stacker 120, the client PC 130, the information processing apparatus 140, and the inspection apparatus 150 according to the present embodiment.

The client PC 130 generates a print job and transmits the print job to the information processing apparatus 140 via the network 160. The client PC 130 includes a control unit 230 and a UI unit 235. The control unit 230 includes a central processing unit (CPU) 231, a random access memory (RAM) 232, a read-only memory (ROM) 233, and a network interface (NW I/F) 234.

The CPU 231 controls operations, performs computations of respective units included in the client PC 130 and executes programs stored in the ROM 233 and loaded into the RAM 232 via an internal bus 273. The RAM 232 is one type of general volatile memory directly accessible from the CPU 231. The RAM 232 is used as a work area or a temporary data storage area of the CPU 231. The RAM 232 functions as a temporary storage area and a work memory when the client PC 130 operates. The NW I/F 234 transmits and receives data to and from the information processing apparatus 140 via the network 160. The UI unit 235 includes, for example, a keyboard, a mouse, a display, and other input and output apparatuses, and allows a user to input various setting values or specified values.

The information processing apparatus 140 executes raster image processing (RIP) of print data and document data, and generates bitmap images for printing by the image forming apparatus 100. The information processing apparatus 140 executes control related to printing operations of the image forming apparatus 100 and manages a print job. The information processing apparatus 140 includes a control unit 240 and a UI unit 246. The control unit 240 includes a CPU 241, a RAM 242, a ROM 243, a NW I/F 244, an image processing unit 245, and a video I/F 247.

The CPU 241 controls operations, performs computations of respective units included in the information processing apparatus 140, and executes programs stored in the ROM 243 and loaded into the RAM 242 via the internal bus 274.

The RAM 242 is one type of general-purpose volatile memory directly accessible from the CPU 241. The RAM 242 is used as a work area or a temporary data storage area of the CPU 241.

The RAM 242 functions as a temporary storage area and a work memory when the information processing apparatus 140 operates.

The NW I/F 244 communicates with the client PC 130, the image forming apparatus 100, and the inspection apparatus 150 via the network 160.

The inspection apparatus 150 may include a NW I/F 255, and the information processing apparatus 140 may communicate with the inspection apparatus 150 via the NW I/F 255 and the NW I/F 244. An example case in which a RIP image to be used by the image forming apparatus 100 for printing is used as a reference image serving as a correct answer in an inspection is described. In this case, the reference image may be transmitted to the inspection apparatus 150 via a communication I/F 214, or may be transmitted to the inspection apparatus 150 via a NW I/F 207 and an accessory I/F 224.

The image processing unit 245 executes RIP processing of print data. For example, the UI unit 246 includes a keyboard, a mouse, a display, and other input and output apparatuses, and allows a user to input various setting values or specified values.

The image forming apparatus 100 executes print output processing based on various types of input data, such as print data transmitted from the client PC 130 and the information processing apparatus 140. The image forming apparatus 100 is connected to the UI unit 101 and a sheet feeding deck 260. The image forming apparatus 100 includes a control unit 200 and a printer unit 209. The control unit 200 includes a CPU 201, a RAM 202, a ROM 203, an accessory I/F 204, an engine I/F 205, a sheet feeding deck I/F 206, the NW I/F 207, an image processing unit 208, and a video I/F 217. The control unit 200 is connected to the printer unit 209 via the engine I/F 205.

The CPU 201 controls operations and performs computations of respective units included in the image forming apparatus 100 via the internal bus (system bus) 270. The CPU 201 manages execution of programs stored in the ROM 203 and loaded into the RAM 202. The RAM 202 is one type of general volatile memory directly accessible from the CPU 201. The RAM 202 is used as a work area or a temporary data storage area of the CPU 201. The RAM 202 functions as a temporary storage area and a work memory when the image forming apparatus 100 operates. The ROM 203 stores program data that is executed by the CPU 201 at the time of activation and setting data for the control unit 200.

The accessory I/F 204 is connected to an accessory I/F 215 and the accessory I/F 224 via a cable 280. In other words, the image forming apparatus 100 communicates with the inspection unit 110 and the large-capacity stacker 120 via the accessory I/Fs 204, 215, and 224.

The engine I/F 205 manages communication and control of the printer unit 209.

The sheet feeding deck I/F 206 manages communication and control of the sheet feeding deck 260. The sheet feeding deck 260 is a general term indicating the sheet feeding decks 102 and 103 and the option deck 104 as the hardware configuration. The UI unit 101 is a user interface allowing the user to perform general operations on the image forming apparatus 100.

The NW I/F 207 is connected to the NW I/F 244 of the information processing apparatus 140 via the network 160, and manages communication between the information processing apparatus 140 and the image forming apparatus 100. In this example, the interfaces which are respectively connected to the internal bus 270 and the network 160 are directly connected to each other. However, for example, the information processing apparatus 140 and the image forming apparatus 100 may be connected to each other via a network, and the connection mode is not limited to the above. The video I/F 217 is connected to the video I/F 247 via a video cable 180, and manages image data communication between the information processing apparatus 140 and the image forming apparatus 100.

A connection interface for connecting the information processing apparatus 140 to the image forming apparatus 100 may have a configuration in which the functions of the NW I/F 244 and the video I/F 247 are combined. A connection interface for connecting the image forming apparatus 100 to the information processing apparatus 140 may have a configuration in which the functions of the NW I/F 207 and the video I/F 217 are combined.

The image processing unit 208 executes processing for converting the image and the document data received via the video cable 180 into print data. The printer unit 209 prints the received binary bitmap data on a recording sheet by using color materials.

The inspection unit 110 executes control for transmitting image data acquired by an image reading unit 216 to the inspection apparatus 150 described below via the communication cable 170. Then, the inspection unit 110 acquires an inspection result from the inspection apparatus 150, and transmits the inspection result to the image forming apparatus 100 and the large-capacity stacker 120. The inspection unit 110 includes a control unit 210. The control unit 210 includes a CPU 211, a RAM 212, a ROM 213, the communication I/F 214, the accessory I/F 215, and the image reading unit 216.

The CPU 211 controls operations, performs computations of respective units included in the inspection unit 110, and executes programs stored in the ROM 213 and loaded into the RAM 212 via an internal bus 271. The RAM 212 is one type of general volatile memory directly accessible from the CPU 211. The RAM 212 is used as a work area or a temporary data storage area of the CPU 211. The RAM 212 functions as a temporary storage area and a work memory when the inspection unit 110 operates. The communication I/F 214 communicates with the inspection apparatus 150 via the communication cable 170, and transmits and receives data, such as a scan image read by the image reading unit 216 and an inspection result. The accessory I/F 215 is connected to the accessory I/Fs 204 and 224 via the cable 280. The image reading unit 216 is an image reading unit for reading printed products conveyed from the image forming apparatus 100.

The large-capacity stacker 120 includes a control unit 220 and a sheet discharge unit 225. The control unit 220 includes a CPU 221, a RAM 222, a ROM 223, and the accessory I/F 224. The CPU 221 controls operations, performs computations of respective units included in the large-capacity stacker 120, and executes programs stored in the ROM 223 and loaded into the RAM 222 via the internal bus 272. The RAM 222 is one type of general volatile memory directly accessible from the CPU 221. The RAM 222 is used as a work area or a temporary data storage area of the CPU 221. The RAM 222 functions as a temporary storage area and a work memory when the large-capacity stacker 120 operates. The sheet discharge unit 225 manages the sheet discharge operation for the main tray and the top tray, and monitoring and operation control of stacking conditions of the main tray and the top tray. The large-capacity stacker 120 may change a discharge destination of the printed material conveyed from the inspection unit 110 based on the inspection result. For example, in a case where the discharge destination is changed based on an inspection result indicating the presence or absence of defects in the printed products, a sheet without a defect is discharged to a normal stacking portion, and a sheet having a defect is discharged to the top tray. The sheets may be discharged to the same discharge destination regardless of the inspection result.

The inspection apparatus 150 inspects scan images of the printed products acquired by the inspection unit 110. The inspection apparatus 150 includes a control unit 250 and a UI unit 257. The control unit 250 includes a CPU 251, a RAM 252, a ROM 253, a communication I/F 254, a NW I/F 255, and an inspection processing unit 256.

The CPU 251 controls operations, performs computations of respective units included in the inspection apparatus 150, and executes programs stored in the ROM 253 and loaded into the RAM 252 via an internal bus 275. The RAM 252 is one type of general volatile memory directly accessible from the CPU 251. The RAM 252 is used as a work area or a temporary data storage area of the CPU 251. The RAM 252 functions as a temporary storage area and a work memory when the inspection apparatus 150 operates. The communication I/F 254 communicates with the inspection unit 110 via the communication cable 170, and transmits and receives data, such as a scan image read by the image reading unit 216 and an inspection result. The NW I/F 255 transmits and receives data to and from the client PC 130, the image forming apparatus 100, and the information processing apparatus 140 via the network 160. The inspection processing unit 256 inspects the printed products for the presence or absence of a defect. For example, the UI unit 257 is a liquid crystal display connected to the inspection apparatus 150. The UI unit 257 receives a user input with respect to the inspection apparatus 150, and displays a state of the inspection apparatus 150 and an inspection result.

### <Software Block Diagram>

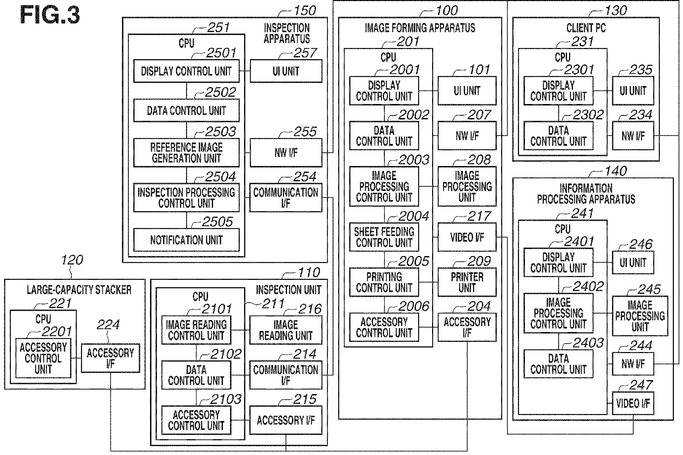

Fig. 3 is a block diagram illustrating a software configuration according to the present disclosure. A program of the client PC 130 is stored in the ROM 233, read into the RAM 232, and executed by the CPU 231. Processing functions of the CPU 231 include a display control unit 2301 and a data control unit 2302.

The display control unit 2301 displays a screen on which the user performs operations via the UI unit 235. The display control unit 2301 stores print setting information in the RAM 232 when the user inputs a setting for a print job via the UI unit 235, and notifies the data control unit 2302 to execute printing when the user inputs execution of printing. The print setting information refers to setting information about print sheet size and one-sided/two-sided printing. The print setting information may further include, for example, setting information about face-up/face-down and normal/reverse order. The data control unit 2302 transmits a print job to the information processing apparatus 140 via the NW I/F 234.

A program of the information processing apparatus 140 is stored in the ROM 243, read into the RAM 242, and executed by the CPU 241. Processing functions of the CPU 241 include a display control unit 2401, an image processing control unit 2402 and a data control unit 2403.

The display control unit 2401 displays a screen on which the user performs operations via the UI unit 246. The display control unit 2401 stores print setting information in the RAM 242 when the user inputs a setting for a print job via the UI unit 246, and notifies the data control unit 2403 to execute printing when the user inputs execution of printing.

The image processing control unit 2402 controls the image processing unit 245. In response to receipt of an instruction to execute printing, image processing unit 245 executes RIP processing to convert print data and document data into bitmap image data based on the print setting information stored in the RAM 242. Specifically, in a case of the RIP processing for generating a preview image (RIP image) which is to be displayed on the UI unit 257 when an inspection setting is registered, and a reference image, for example, an image is generated by converting resolution of 600 dpi to 300 dpi. On the other hand, in a case of the RIP processing for generating print data, an image of 600 dpi is generated without reducing the resolution.

In the image processing control unit 2402, a unique image ID is assigned to each RIP image in the order of printing. For example, an image ID No. 1 is assigned to a RIP image to be printed on the first page, and an image ID No. 2 is assigned to a RIP image printed on the second page. An image ID No. 0 may be assigned to a blank RIP image to indicate that the RIP image is blank.

The data control unit 2403 controls receipt of a print job from the client PC 130 and transmission of the print job to the image forming apparatus 100. The data control unit 2403 receives a print job from the client PC 130 via the NW I/F 244, and stores the print job in the RAM 242. The data control unit 2403 transmits a start notification of a print job, print setting information, and RIP images to the image forming apparatus 100 via the NW I/F 244 and the video I/F 247. The data control unit 2403 further transmits information about a variable data printing (VDP) job in which a layout of the contents is common and image-related contents are variable (e.g., a print job for variable images). Examples of information about a VDP job include a record number indicating which record the page currently being printed corresponds to. After transmitting an inspection setting registration job, the data control unit 2403 transmits a print job subsequently in response to receipt of a registration completion notification of the inspection setting from the image forming apparatus 100. The print job includes flag information indicating whether the corresponding preview image is the last sheet (e.g., a subsequent sheet is present when the flag is set to 0, and the sheet is the last sheet when the flag is set to 1).

In the inspection setting registration job, the data control unit 2403 generates RIP images for only one set and transmits the RIP images to the image forming apparatus 100. For example, in a VDP job, in a case where printing per record is four pages, four pages are processed as one set. Even in a case where a print job for 100 pages is actually input, not all the pages are registered as preview images when this print job is 25 repetitions of the four-page set. The term "record" indicates related data that is processed as one unit. For example, it can be said that the above-described print job for 100 pages is a print job including 25 records (25 sets). The inspection setting registration job may be a job in which a set of pages is automatically detected from a VDP job and transmitted by the data control unit 2403, or the number of pages (the number of reference images) for one set is specified by a user's operation performed on the information processing apparatus 140. While the inspection setting registration job is input separately in the present embodiment, a reference image group for one set may be set by using the actually-input print job. The present embodiment is applicable as long as printed products include at least two or more sets of pages.

The image-related contents being variable refers, for example, to a case in which, in printed products to be sent for advertising purposes, content suitable for each customer is printed based on customer information. Specifically, as for the promotional printed products for a fitness center, an image of a man exercising is printed on the printed products targeted for men, and an image of a woman exercising is printed on the printed products targeted for women.

A program of the image forming apparatus 100 is stored in the ROM 203, read into the RAM 202, and executed by the CPU 201. Processing functions of the CPU 201 include a display control unit 2001, a data control unit 2002, an image processing control unit 2003, a sheet feeding control unit 2004, a printing control unit 2005, and an accessory control unit 2006.

The display control unit 2001 displays a screen on which the user performs operations via the UI unit 101. In response to the user performing an additional print job setting via the UI unit 101, print setting information is stored in the RAM 202 in addition to the setting set on the information processing apparatus 140. The print job setting set via the image forming apparatus 100 refers to an insertion setting of an interleaving sheet, such as a job separator sheet or copy separator sheet, and a sheet setting. In a case where printing is suspended and restarted, a notification to resume printing is transmitted to the data control unit 2002.

The data control unit 2002 controls receipt of a print job and a notification from the information processing apparatus 140 and transmission of the print job and the notification to the inspection apparatus 150. In response to receipt of a start notification of the print job from the information processing apparatus 140, the data control unit 2002 stores the print setting information and the RIP images received via the NW I/F 207 and the video I/F 217 in the RAM 202. In the inspection setting registration job, preview images generated and transmitted by the data control unit 2403 of the information processing apparatus 140 are transmitted to the inspection apparatus 150 via the NW I/F 207. In response to receipt of a registration completion notification of the inspection setting after the inspection apparatus 150 has received the preview images and completed the inspection setting, the data control unit 2002 transmits a registration completion notification to the information processing apparatus 140.

The preview images may be transmitted to the inspection apparatus 150 from the information processing apparatus 140, and the configuration is not limited to the above. Further, in the main print job, in parallel with the printing operation that is executed by the printer unit 209 described below, RIP images (reference images) to be used as the correct answer for the inspection and image allocation information described below are transmitted to the inspection apparatus 150. Furthermore, a start notification of the inspection job is transmitted. The image allocation information includes information about a rotation amount, a shift amount, a printing face (front/back), and a sheet number which are to be determined by the printing control unit 2005 when printing is actually executed on a sheet, in addition to information about one-side/two-side (one-sided/two-sided printing) based on the print setting information. The image allocation information is not limited to the above-described examples, and may also include other information. The image forming apparatus 100 further transmits information about a record number received from the information processing apparatus 140.

While the image forming apparatus 100 executes the printing operation and the operation for transmitting RIP images to the inspection apparatus 150 in parallel in the present embodiment, transmission of the RIP images may be performed by the information processing apparatus 140, for example. Alternatively, another hardware device may be provided between the information processing apparatus 140 and the image forming apparatus 100, and the hardware may perform transmission of printing images to the image forming apparatus 100 and transmission of RIP images to the inspection apparatus 150.

The image processing control unit 2003 controls the image processing unit 208. The image processing unit 208 acquires print processing information and the RIP images stored in the RAM 202 and executes image processing for converting data into print data. In the image processing for converting data into print data, for example, page-description language (PDL) data is converted into multi-bit bitmap data by rasterizing the PDL data, and the multi-bit bitmap data is converted into binary bitmap data by screen processing. The binary bitmap data acquired in the above-described image processing is transmitted to the printer unit 209 via the engine I/F 205.

The sheet feeding control unit 2004 controls the sheet feeding deck 260 via the sheet feeding deck I/F 206.

The sheet feeding control unit 2004 conveys sheets to the printer unit 209 from the sheet feeding deck 260 based on printing processing information stored in the RAM 202. The printing control unit 2005 executes control of the printer unit 209 via the engine I/F 205. Based on the printing processing information, the printing control unit 2005 instructs the printer unit 209 to print bitmap data transmitted from the image processing control unit 2003 on the sheets conveyed as instructed by the sheet feeding control unit 2004. When a printing suspension notification or a restart notification is received from the accessory control unit 2006 described below, the printer unit 209 is instructed to suspend or restart printing based on the notification. The accessory control unit 2006 notifies the large-capacity stacker 120 of a sheet discharge destination via the accessory I/F 204 based on the print setting information stored in the RAM 202. Further, the accessory control unit 2006 receives a printing suspension notification or a restart notification from the inspection unit 110 and transmits the notification to the printing control unit 2005.

A program of the inspection unit 110 is stored in the ROM 213, read into the RAM 212, and executed by the CPU 211. Processing functions of the CPU 211 include an image reading control unit 2101, a data control unit 2102, and an accessory control unit 2103.

The image reading control unit 2101 controls the image reading unit 216. For example, the image reading unit 216 includes an image capturing function using a contact image sensor (CIS), and captures an image (hereinafter referred to as "scan image") of a sheet passing through the inspection unit 110. The CIS incorporated in the image reading unit 216 is one example of a sensor, and a sensor of another type, such as a charge-coupled device (CCD) image sensor, may be used, and in such a case, an image capturing method is not limited.

The data control unit 2102 transmits a scan image to the inspection apparatus 150 via the communication I/F 214. The data control unit 2102 receives setting information about an inspection operation mode, which is described below, set by the inspection apparatus 150, and stores the setting information in the RAM 212. Further, the data control unit 2102 receives a result of the inspection executed by the inspection apparatus 150.

Based on an inspection result and the setting information about an inspection operation mode received by the data control unit 2102, the accessory control unit 2103 transmits a control notification to the image forming apparatus 100 and the large-capacity stacker 120 via the accessory I/F 215. In a case where a discharge destination is to be changed based on the inspection result, the accessory control unit 2103 transmits a notification to the large-capacity stacker 120 so that the printed products without defects are discharged to the main tray of the sheet discharge unit 225, and the printed products having defects are discharged to the top tray of the sheet discharge unit 225. In a case of a setting in which printing is suspended when defective printed products are consecutively printed by a preset number, the accessory control unit 2103 transmits a notification for suspending printing to the image forming apparatus 100 when the number of defective printed products has reached the preset number.

A program of the inspection apparatus 150 is stored in the ROM 253, read into the RAM 252, and executed by the CPU 251. Processing functions of the CPU 251 include a display control unit 2501, a data control unit 2502, a reference image generation unit 2503, an inspection processing control unit 2504, and a notification unit 2505.

The display control unit 2501 displays a screen on the UI unit 257. The display control unit 2501 displays an inspection result, described below, which has been acquired by the inspection processing control unit 2504 and stored in the RAM 252, and displays a screen on which the user performs operations. When the user performs an inspection setting via the UI unit 257, the inspection setting information is stored in the RAM 252.

The data control unit 2502 receives preview images, RIP images, and image allocation information from the image forming apparatus 100 via the NW I/F 255, and stores the images and the information in the RAM 252. In response to receipt of a start notification of an inspection job, the data control unit 2502 generates a new inspection job and stores the new inspection job in the RAM 252. Further, the data control unit 2502 stores the scan images transmitted via the communication I/F 254 in the RAM 252. Furthermore, the data control unit 2502 notifies the inspection unit 110 of an inspection result acquired by the inspection processing control unit 2504 and the inspection setting information stored in the RAM 252. In response to receipt of a registration completion notification from the reference image generation unit 2503 described below, the data control unit 2502 transmits the registration completion notification to the image forming apparatus 100.

The reference image generation unit 2503 stores the inspection setting received via the UI unit 257 in the RAM 252. Further, the reference image generation unit 2503 generates reference images from the RIP images and the image allocation information, and stores the generated reference images in the RAM 252. The reference image generation unit 2503 further determines whether the current sheet is the last sheet, based on a last sheet flag and image allocation information.

The inspection processing control unit 2504 executes control of the inspection processing unit 256. Hereinafter, a general outline of a printing image inspection is described. First, the inspection processing control unit 2504 executes inspection by reading and comparing a scan image and a corresponding reference image stored in the RAM 252. Specifically, the inspection processing control unit 2504 extracts feature points from each of the reference image and the scan image, and executes alignment of the reference image and the scan image based on the extracted feature point. In a case where a difference between a pixel value (luminance value) of an inspection target pixel included in the scan image and a pixel value (luminance value) of a comparison target pixel included in the reference image, acquired by the alignment, is less than or equal to threshold, the inspection processing control unit 2504 determines that the inspection target pixel has passed the inspection. A different threshold is specified depending on the inspection level. This inspection is executed on each of the scan images for corresponding reference images. In a case where a deviation exceeding a certain threshold has occurred from a reference image in a printing position when the alignment is executed, the inspection for determining positional deviation is determined as a failure.

When an inspection of all pixels is completed, determination of whether a scan image is normal is performed by determining whether a total number of failed pixels is less than or equal to a pass threshold. In a case where a total number of failed pixels is the pass threshold or less, it is determined that the scan image is normal. In a case where a total number of failed pixels exceeds the pass threshold, it is determined that the scan image is not normal. Further, the inspection result describing information about presence/absence of defects in the printed products, information about a type of detected defects (e.g., spot and streak), and position information about the defects are stored in the RAM 252. Further, based on the image allocation information, determination of whether the current sheet is the last sheet is executed. The inspection processing control unit 2504 also determines and processes the inspection operation mode received by the display control unit 2501.

Next, a general outline of a data inspection is described. The inspection processing control unit 2504 firstly executes processing for extracting data from a character string, a bar code, and a QR code (registered trademark) within the scan image stored in the RAM 252. This processing is executed by using a preset letter-shape font for optical character recognition (OCR) and a standard of the bar code, and OCR processing is executed with respect to the character, and decoding processing is executed with respect to the bar code. The letter-shape font refers to data in which letter-shape images of letters are associated with character codes which are to be used for OCR when a data inspection and a matching inspection described below are implemented. The user can create a letter-shape font by scanning the letter shapes printed on a sheet, cutting out the letter shapes for each of letters, and inputting character codes for the cut letter images. The created letter-shape font is stored in the RAM 252 of the inspection apparatus 150. While a creation method of the letter-shape font according to the present embodiment has been described, the present embodiment is not limited thereto. Any method can be employed as long as data in which character codes are associated with letter images cut out from a scan image can be created.

In the data inspection, an inspection is executed to determine whether a character string and/or a bar code within a data inspection setting area is readable. In a case where data is readable, it is determined that the inspection is successful, and in a case where data is not readable, it is determined that the inspection is a failure. A data comparison inspection can also be executed to execute a comparison and to determine whether the inspection result of a read character string and a read bar code, which are extracted data, matches the corresponding data (e.g., correct data) of a prepared correct file in a comma-separated value (CSV) format. Even in this case, as a result of the comparison, in a case where the data matches, it is determined that the inspection is successful, and in a case where the data does not match, it is determined that the inspection is a failure. The inspection result is stored in the RAM 252. For example, the inspection result of a character string and/or a bar code read from the printed products, a result of comparison with correct data, and information about a position of a read character string and/or a read bar code displayed on the UI unit 257 are stored in the RAM 252.

Further, a general outline of the matching inspection is described. Similar to the data inspection described above, processing for extracting a character string, a bar code, and a QR code from a scan image is executed. In the matching inspection, determination of whether data extracted from all matching target areas matches the corresponding data is performed. In a case where the extracted data matches the corresponding data, it is determined that the inspection is successful, and in a case where the extracted data does not match with the corresponding data, it is determined that the inspection is a failure. A result of the inspection is stored in the RAM 252. For example, a result of a character string and/or a bar code read from the printed products, a result describing match/mismatch of data, and information about a position of a read character string and/or a read bar code displayed on the UI unit 257 are stored in the RAM 252.

After completion of the printing image inspection, the data inspection, and the matching inspection described above, the display control unit 2501 instructs the UI unit 257 to display the inspection result stored in the RAM 252. The user recognizes the inspection result when the inspection result is displayed on the UI unit 257.

The notification unit 2505 transmits a notification to the inspection unit 110 via the communication I/F 254.

The notification unit 2505 transmits the inspection operation mode and the inspection result acquired by the inspection processing control unit 2504 and stored in the RAM 252 to the inspection unit 110.

A program of the large-capacity stacker 120 is stored in the ROM 223, read into the RAM 222, and executed by the CPU 221. Processing functions of the CPU 221 include an accessory control unit 2201.

The accessory control unit 2201 controls the sheet discharge unit 225. The accessory control unit 2201 receives a sheet discharge notification from the image forming apparatus 100 or the inspection unit 110, and discharges sheets to the main tray or the top tray included in the sheet discharge unit 225 based on details of the notification. In order to notify the image forming apparatus 100 and the inspection unit 110 that the printed products have been discharged without being jammed within the large-capacity stacker 120, the accessory control unit 2201 transmits an external discharge notification to the image forming apparatus 100 and the inspection unit 110 when sheet discharge is completed.

### <Job Setting>

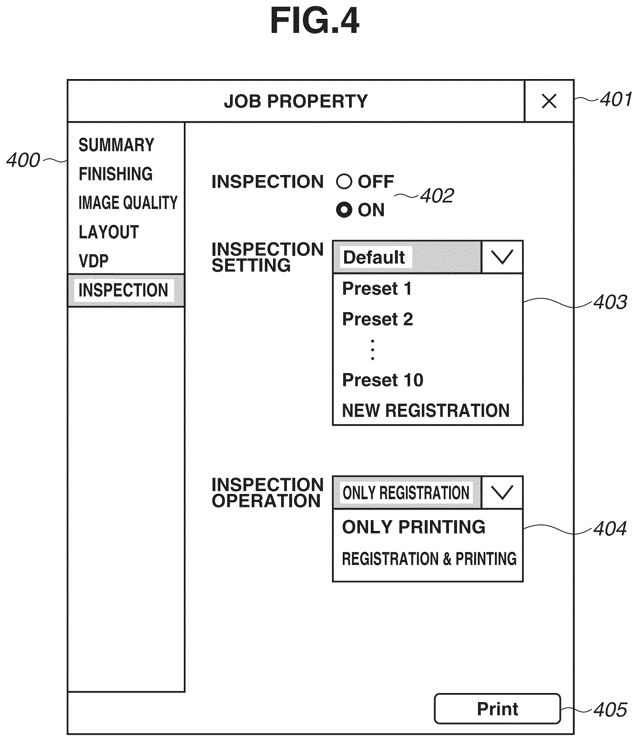

Next, selection of an inspection method for an inspection job and an operation of a print job according to the present disclosure are described with reference to Fig. 4.

An inspection method selection portion 400 is an example of a screen on which a setting for a print job input by the user is received via the client PC 130. The display control unit 2301 is executed by the CPU 231, and displays the screen on the UI unit 235 to receive an input from the user. The received input is stored in the RAM 232. The print job generated by the client PC 130 is transmitted to and managed by the information processing apparatus 140.

In a case where the user selects " ON" for an item "inspection" in an inspection mode setting portion 402, a property setting is performed subsequently. A print job in which the item "inspection" is set to "ON" is referred to as an "inspection job". When "OFF" is selected, for example, portions 403 and 404 are displayed in a gray-out state to prevent a user's selection. In a case where "OFF" is selected, a print job is processed as a normal print job which does not execute the inspection.

In response to a print button 405 being pressed, the printing control unit 2005 of the image forming apparatus 100 executes the normal printing operation. In the inspection setting portion 403, the user selects a method for setting an inspection area and an inspection level. In a case where "default" is selected, the inspection processing control unit 2504 of the inspection apparatus 150 inspects an entire image area at a standard level. In a case where any one of "preset 1" to "preset 10" is selected, the inspection processing control unit 2504 inspects a prespecified area based on a prespecified level. In a case where "new registration" is selected, the user creates a new inspection setting, and the inspection processing control unit 2504 executes the inspection based on the setting. In a case where any one of "preset 1" to "preset 10" is selected, the inspection processing control unit 2504 executes the inspection based on an area and a level previously specified for the reference image. The inspection settings for "preset 1" to "preset 10" are stored in the RAM 252 of the inspection apparatus 150, so that the reference image generation unit 2503 applies the inspection setting to the reference image when the print button 405 is pressed.

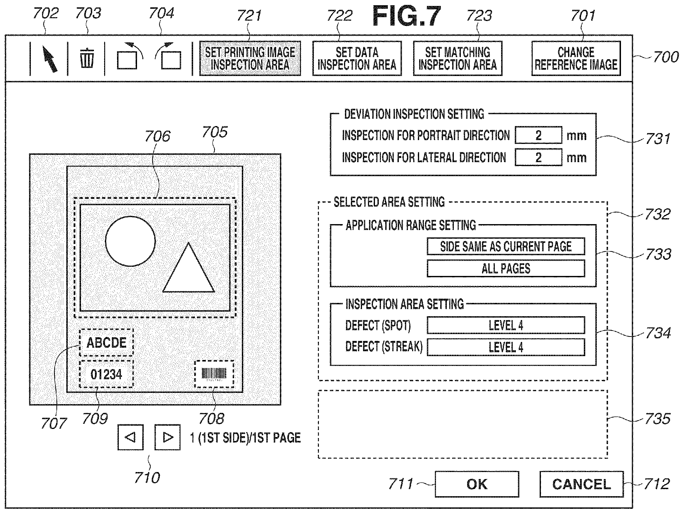

In a case where "new registration" is selected, the display control unit 2501 of the inspection apparatus 150 displays an inspection setting screen 700 illustrated in Fig. 7 on the UI unit 257 when reception of the preview images is completed. Fig. 7 is described below in detail. The user newly creates an inspection setting for the preview image, and the inspection processing control unit 2504 of the inspection apparatus 150 executes inspection based on the setting. In a case where the user selects "default" or "preset 1" to "preset 10" in the inspection setting portion 403 and presses the print button 405, the display control unit 2501 does not display the inspection setting screen 700.

In a case where the print button 405 displayed on the inspection method selection portion 400 is operated and pressed by the user, the inspection apparatus 150 executes an inspection setting registration job and a main printing job according to the setting details selected from the inspection operation setting portion 404 described below.

The user selects registration of the inspection setting and a combination of printing operations of the main print job from the inspection operation setting portion 404. When "only registration" is selected, the reference image generation unit 2503 of the inspection apparatus 150 executes only storing of the preview images and registration of the inspection setting. In a case where "only printing" is selected, the printing control unit 2005 of the image forming apparatus 100 executes printing using a previously registered inspection setting, and the inspection processing control unit 2504 of the inspection apparatus 150 executes generation of the reference images and the inspection in parallel with printing. In a case where "registration & printing" is selected, the above-described operations for "only registration" and "only printing" are executed consecutively.

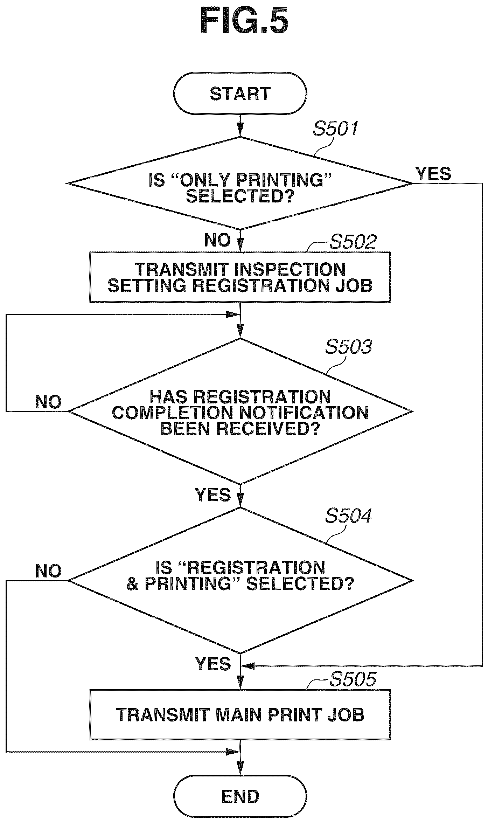

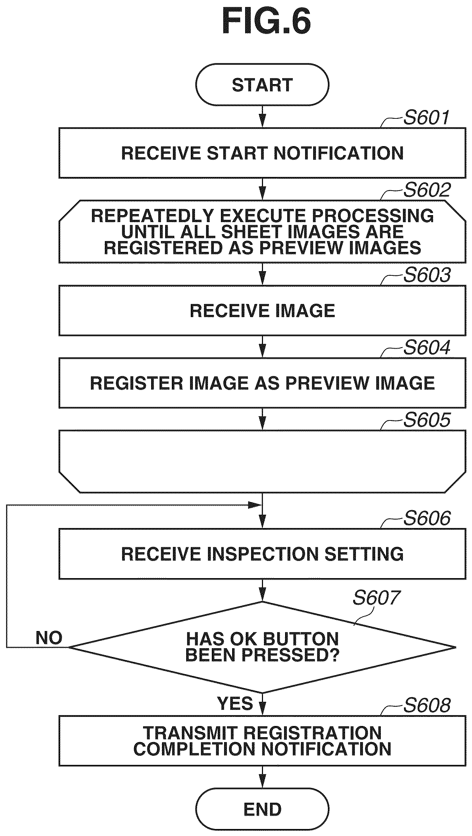

Generation of the preview images and processing for storing the inspection setting are described below with reference to a flowchart in Fig. 6. In response to the print button 405 being pressed, the display control unit 2301 stores the setting input to the portions 402 to 404 in the RAM 232. The data control unit 2302 that is executed by the CPU 231 of the client PC 130 transmits a print job to the information processing apparatus 140. The data control unit 2403 that is executed by the CPU 241 of the information processing apparatus 140 controls execution of printing and an inspection based on the print setting information about the received print job. Details of printing and inspection processing according to the setting are described in Fig. 5. When a close button 401 is pressed, the screen is closed without storing the setting set on the screen in the RAM 232.

### <Job Execution Processing>

Next, job execution processing that is executed by the information processing apparatus 140 is described with reference to a flowchart in Fig. 5. The CPU 241 loads a program code stored in the ROM 243 into the RAM 242, and implements the flowchart by reading and executing the program code loaded into the RAM 242.

In step S501, the data control unit 2403 executed by the CPU 241 determines whether a setting value set in the inspection operation setting portion 404 illustrated in Fig. 4 is "only printing". In a case where the setting value is "only printing" (YES in step S501), the processing proceeds to step S505. In a case where a setting value is not "only printing" (NO in step S501), the processing proceeds to step S502.

In step S502, the data control unit 2403 transmits an inspection setting registration job to the image forming apparatus 100. In this processing, the data control unit 2403 transmits the preview images to be displayed on the UI unit 257 of the inspection apparatus 150 when the user performs an inspection setting. The preview images are RIP images with lower resolution than the images for printing because the preview images are used for display. A preview image is displayed to allow the user to easily set an inspection position and an inspection area, and is not used in the actual inspection.

In step S503, determination of whether a registration completion notification of the inspection setting has been received is performed. In a case where it is determined that the registration completion notification has been received (YES in step S503), the processing proceeds to step S504. In a case where the registration completion notification has not been received (NO in step S503), the processing remains in a standby state. The inspection setting registration operation is described below with reference to Fig. 6.

In step S504, the data control unit 2403 determines whether the setting value set in the inspection operation setting portion 404 illustrated in Fig. 4 is "registration & printing". In a case where "registration & printing" is set (YES in step S504), the processing proceeds to step S505. In a case where "only registration" is set (NO in step S504), the processing ends.

In step S505, the data control unit 2403 transmits a main print job for an inspection to the image forming apparatus 100. As described above with reference to the block diagram in Fig. 3, in the main print job, the image forming apparatus 100 executes printing by the printer unit 209 and transmits the RIP images to the inspection apparatus 150 in parallel with printing operations. When transmission of all RIP images and execution of printing processing are ended, the processing ends.

### <Inspection Setting Registration Processing>

Fig. 6 is a flowchart illustrating processing that is executed by the inspection apparatus 150 when an inspection setting for an inspection is registered.

A program of the inspection apparatus 150 according to this flowchart is stored in the ROM 253, read into the RAM 252, and executed by the CPU 251.

In step S601, the data control unit 2502 executed by the CPU 251 of the inspection apparatus 150 receives a start notification of an inspection setting registration job from the image forming apparatus 100. Next, in step S602, the data control unit 2502 repeatedly executes the processing until preview images of all sheets are stored in the RAM 252 of the inspection apparatus 150. In step S603, the data control unit 2502 receives the preview images generated by the image processing control unit 2402 of the information processing apparatus 140. The print setting information may be received from the information processing apparatus 140 or the client PC 130.

Next, in step S604, the reference image generation unit 2503 registers the image received in step S603 in the RAM 252 as a preview image. The data control unit 2502 stores the preview image in the RAM 252. Then, the processing proceeds to step S605. The processing in steps S602 to S605 is executed repeatedly until the data control unit 2502 determines that the reference image generation unit 2503 completes the registration of the preview images of all sheets. The processing is executed repeatedly until the data control unit 2502 receives information indicating that the current sheet is the last sheet included in the preview images.

When the reference image generation unit 2503 determines that registration of all the preview images has been completed, the processing proceeds to step S606, and the reference image generation unit 2503 receives an inspection setting from the user. The inspection setting is described below in detail with reference to Fig. 7. In step S607, it is determined whether an OK button 711 displayed on an inspection setting screen 700 has been pressed. The processing in steps S606 and S607 are repeatedly executed until the OK button 711 is pressed, and an inspection setting is received. In a case where it is determined that the OK button 711 has been pressed (YES in step S607), the processing proceeds to step S608. In step S608, the reference image generation unit 2503 stores the inspection setting received from the user in the RAM 252. The data control unit 2502 notifies the image forming apparatus 100 that inspection setting registration has been completed and ends the processing.

### <Inspection Setting>

Next, the inspection setting is described with reference to Fig. 7.

Fig. 7 is a diagram illustrating an example of the inspection setting screen 700 that is displayed on the UI unit 257 by the display control unit 2501 of the inspection apparatus 150. A button 701 is a preview image change button that is used when the preview image is changed. A button 702 is an inspection area selection button. The user presses the button 702 to select an already-set area. A button 703 is an inspection area deletion button. The user presses the button 703 to delete a selected area. A button 704 is a button for rotating an image displayed in an area 705. The area 705 is a display area for displaying a read preview image. In a case where a plurality of sheets has been read, the user changes the displayed image by pressing buttons 710. The OK button 711 is a button for storing the setting set via the inspection setting screen 700. In response to receipt of pressing performed on the OK button 711, the reference image generation unit 2503 stores the inspection setting in the RAM 252. In this process, a page number of the preview image is stored in association with the inspection setting. For example, when an inspection setting is for the first page of the preview image, the inspection setting is stored as an inspection setting No. 1, and when an inspection setting is for the second page, the inspection setting is stored as inspection setting No. 2.

A button 712 is a cancel button for inputting an instruction for stopping the inspection job without storing a setting set on the inspection setting screen 700. A button 721 is pressed by the user when a new printing image inspection area is created. After pressing the button 721, the user sets an inspection area on a preview image displayed in the area 705. A setting example of the printing image inspection area is illustrated in an area 706. A button 722 is pressed by the user when a new data inspection area is created. A data inspection is a character inspection or a bar code inspection. After pressing the button 722, the user sets an inspection area with respect to the preview image displayed in the area 705. A setting example of a character inspection area is illustrated in an area 707. A setting example of a bar code inspection area is illustrated in an area 708. A button 723 is pressed by the user when a new matching inspection area is created. After pressing the button 723, the user sets an inspection area with respect to the preview image displayed in the area 705. A setting example of a matching inspection area is illustrated in an area 709.

In Fig. 7, each of the areas 706, 707, 708, and 709 are similarly indicated by a black dotted line. However, the areas may be displayed in a state where the areas 706 to 709 can be identified as the areas where different processing is executed. For example, a frame of each area where different processing is executed may be displayed in a different color or indicated by a different dashed line. The user may be allowed to select a display color of the frame.

A serial number inspection may be executed in addition to the above-described printing image inspection, the character inspection, the bar code inspection, and the matching inspection. By the serial number inspection, presence and absence of regularity in character strings within areas included in a plurality of inspection images are inspected. A specified rule for an inspection is received after the setting for the inspection area has been received from the user. Examples of the specified rule include a start number, an end number, and an increment/decrement value.

A setting item 731 is an item for setting a positional deviation inspection. The user sets an acceptable deviation amount of a printing position with respect to a reference image. In the present embodiment, a case in which the user specifies a deviation amount of 2 mm as a deviation to be detected is described. In other words, a value specified by the user corresponds to a threshold for the deviation detection. In a case where a deviation of the set threshold or more is detected, the inspection is determined as failed.

A setting area 732 includes a group of Uls for applying a setting with respect to the area currently selected in the area 705. An application range of the selected area is set by a setting item 733. In a case where no application range is selected, a selected inspection area is applied to only a page currently displayed on the area 705. In a case where "side same as current page" is selected, the selected inspection area is applied to the same side of a page depending on whether the selected inspection area is applied to a front side or a back side of the sheet. As for a case of the RIP inspection, the inspection area is managed by page rather than by sheet. Therefore, the application range may be set as "odd-numbered page or even-numbered page". In a case where "all pages" is selected, the selected inspection area is applied to all pages.

A setting item 734 is an item for setting detection levels of a round-shape defect (spot) and a linear-shape defect (streak). A detection level is a parameter which defines the size threshold at which a detected defect is considered a defect depending on a level and a characteristic of the detected defect. For example, there are five levels from levels 1 to 5, and level 5 detects paler and smaller defects than level 1. A different detection level can be set for each of the setting items, so that level 5 may be set for detection of a spot, and level 4 may be set for detection of a streak, for example. The setting item 734 illustrated in Fig. 7 is a case in which the user has selected level 4 for the detection level of a defect (spot) and selected level 4 for the detection level of a defect (streak).

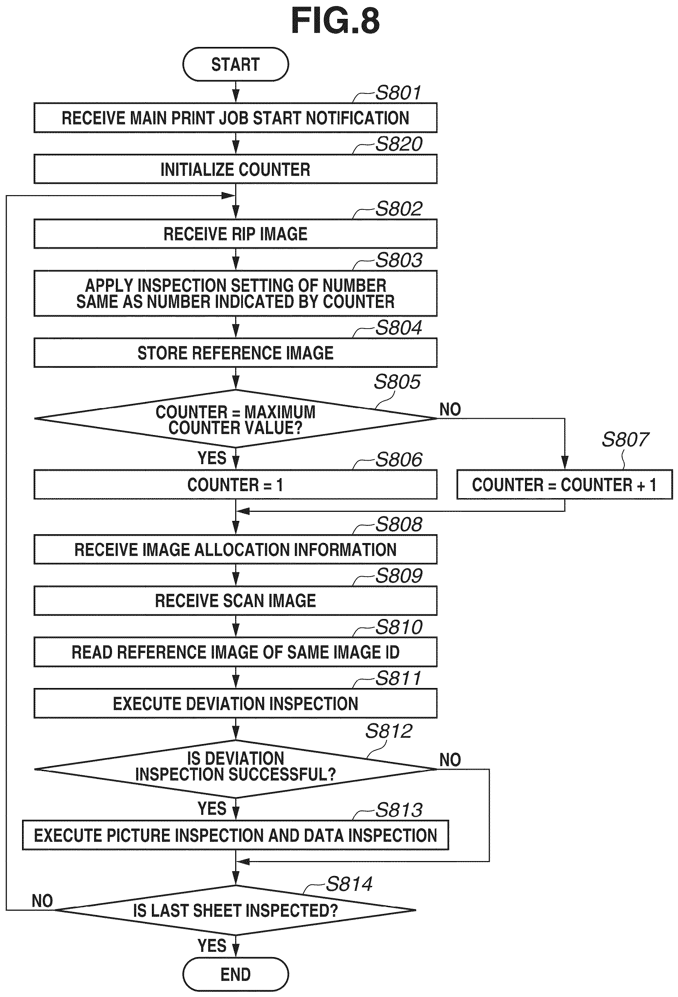

A setting area 735 is described in detail in the second and subsequent embodiments. As described above with reference to the block diagram in Fig. 3, only one set of preview images of the print job is displayed, so that the user registers an inspection setting for only one set. In a case where contents of the images differ but the layout of printing images is common, by periodically and repeatedly applying the inspection areas, it becomes unnecessary for the user to repeatedly input the same inspection setting many times through the user operation. A method for applying the inspection areas for one set to all pages included in the print job and executing the inspection is described in detail with reference to a flowchart of inspection processing illustrated in Fig. 8.

### <Inspection Processing>

Next, the inspection processing is described with reference to the flowchart. A program of the inspection apparatus 150 according to this flowchart is stored in the ROM 253 of the inspection apparatus 150, read into the RAM 252, and executed by the CPU 251. A program of the image forming apparatus 100 is stored in the ROM 203 of the image forming apparatus 100, read into the RAM 202, and executed by the CPU 201. A program of the information processing apparatus 140 is stored in the ROM 243 of the information processing apparatus 140, read into the RAM 242, and executed by the CPU 241.

Fig. 8 is a flowchart illustrating the inspection processing that is executed by the inspection apparatus 150.

In step S801, the data control unit 2502 that is executed by the CPU 251 of the inspection apparatus 150 receives a main print job start notification from the image forming apparatus 100. The printing control unit 2005 executed by the CPU 201 of the image forming apparatus 100 instructs the printer unit 209 to execute printing. Printed sheets are conveyed to the inspection unit 110 from the image forming apparatus 100, and in response to the receipt of the printed sheets, the image reading control unit 2101 that is executed by the CPU 211 of the inspection unit 110 instructs the image reading unit 216 to scan the printed sheets.

In step S820, a counter is initialized. A counter value indicates an inspection setting of which page is applied to a current RIP image, and an initial counter value is one (1). This counter value is stored in the RAM 252.

In step S802, the data control unit 2002 of the image forming apparatus 100 transmits RIP images to the inspection apparatus 150. The data control unit 2502 of the inspection apparatus 150 receives the RIP images and image IDs from the image forming apparatus 100, and stores the RIP images and the image IDs in the RAM 252 in association with each other.

In step S803, the data control unit 2502 applies an inspection setting with the same number as the counter value to a RIP image. When the counter value is one (1), the data control unit 2502 applies the inspection setting No. 1 to the current RIP image.

In step S804, the reference image generation unit 2503 stores the RIP image in the RAM 252 in association with the inspection setting.

In step S805, the data control unit 2502 determines whether a counter value is the maximum counter value. The maximum counter value indicates the number of pages for which the inspection setting has been set. For example, when the inspection setting has been stored for four pages, the maximum counter value becomes four (4). In a case where the data control unit 2502 determines that the current counter value matches the maximum counter value (YES in step S805), the processing proceeds to step S806. In a case where the current counter value does not match the maximum counter value (NO in step S805), the processing proceeds to step S807.

In step S806, the data control unit 2502 overwrites the counter value with one (1) and stores the counter value in the RAM 252. In step S807, the data control unit 2502 increments the current counter value by one (1) and stores the incremented counter value in the RAM 252 as a new counter value. For example, when the current counter value is one (1), a new counter value is two (2). For example, when an image ID of the received RIP image is No. 5, since the counter value has been overwritten with one (1) in step S806, the inspection setting No. 1 is applied to the RIP image having the image ID No. 5. Further, the inspection setting No. 2 is applied to the RIP image having the image ID No. 6. As described above, inspection areas for four pages can be repeatedly applied to a job including pages more than four pages.

Then, the processing proceeds to step S808, and the data control unit 2502 receives the image allocation information from the image forming apparatus 100. When the data control unit 2502 receives the image allocation information, the reference image generation unit 2503 that is executed by the CPU 251 refers to an image ID included in the received image allocation information. Then, the reference image generation unit 2503 reads a RIP image having an image ID matching the image ID (e.g., the RIP image received in step S802, to which the inspection setting has been applied in step S803) from the RAM 252. The reference image generation unit 2503 generates a reference image by using the read RIP image and the image allocation information, and stores the generated reference image and the image allocation information in the RAM 252. Because information to be determined at a timing of when printing is executed is included in the image allocation information, it is necessary to generate a reference image appropriate for the condition where an image is to be printed on a sheet, so that a reference image is generated during a main print job. The reference image generation unit 2503 processes a RIP image based on information about a rotation amount and a shift amount and generates a reference image.

Next, in step S809, the data control unit 2502 receives a scan image read by the image reading unit 216 of the inspection unit 110 and stores the scan image in the RAM 252. The image processing control unit 2402 that is executed by the CPU 241 of the information processing apparatus 140 assigns an image ID to the image.

In step S810, the inspection processing control unit 2504 that is executed by the CPU 251 of the inspection apparatus 150 reads a reference image with the same image ID as that included in the image allocation information received in step S808 from the RAM 252.

In step S811, the inspection processing control unit 2504 executes a positional deviation inspection on the scan image received in step S809 by using the reference image read in step S808. The positional deviation inspection has already been described with reference to the software block diagram of the inspection apparatus 150 in Fig. 3.

When the positional deviation inspection is completed, the processing proceeds to step S812. In step S812, the inspection processing control unit 2504 determines whether the positional deviation inspection is successful. In a case where a result of the positional deviation inspection is successful (YES in step S812), the processing proceeds to step S813. In a case where a result of the positional deviation inspection is a failure (NO in step S812), the processing proceeds to step S814.

In step S813, the inspection processing control unit 2504 executes an image inspection and a data inspection on the scan image received in step S809 by using the reference image read in step S808. The image inspection and the data inspection have already been described with reference to the software block diagram of the inspection apparatus 150 in Fig. 3.

When the image inspection and the data inspection are completed, the processing proceeds to step S814. In a case where the image inspection and the data inspection are not set to the reference image, the processing in step S813 is skipped, and the processing proceeds to step S814.

In step S814, based on the image allocation information, the inspection processing control unit 2504 determines whether the inspected sheet is the last sheet of the inspection job. In a case where the inspected sheet is not the last sheet (NO in step S814), the processing returns to step S802, and generation of reference images and the inspection processing continue until the last sheet is inspected. In a case where the inspected sheet is the last sheet (YES in step S814), the processing ends.

As described above, according to the present embodiment, the user can easily apply the inspection setting to a VDP job for variable image-related contents in a common contents layout and can accurately execute the inspection by only setting the inspection setting for one set. Specifically, while the reference images of each set are acquired because image-related contents are variable in the present embodiment, an inspection setting is specified for only one set, and the inspection setting for the one set is set to the other sets. In this way, the user's workload and an incorrect setting caused by troublesome inspection setting procedures are reduced, enabling an accurate inspection.

In the first embodiment, a method for repeatedly setting the inspection setting to all pages is described. In the following embodiment, a method for setting an inspection setting taking various print jobs into account is described.

### <Second Embodiment>

In the present embodiment, an inspection setting method effective for a case where the user wishes to determine a repeating range of the inspection area by oneself, e.g., the user does not want to repeatedly apply the inspection area to all pages included in a job, is described. Hereinafter, the second embodiment is described with respect to the portion different from the first embodiment. The portion without detailed description is similar to the portion described in the first embodiment.

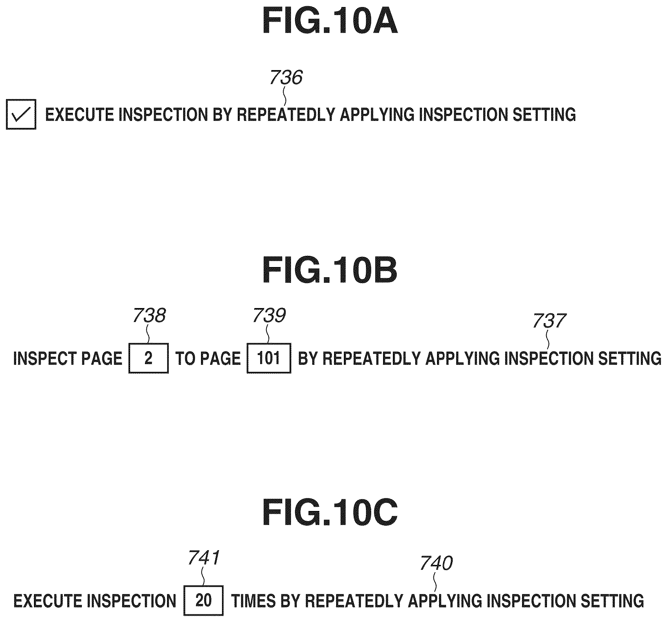

Fig. 10A is a diagram illustrating a setting item 736 displayed in the setting area 735. The setting item 736 is an item for selecting whether to repeatedly apply an inspection setting to all pages included in a job when the inspection is executed by using the currently set inspection setting. When the user checks (turns ON) a checkbox of the setting item 736, the inspection is executed by repeatedly applying the registered inspection setting to all pages as described in the first embodiment. When the user does not check (turns OFF) the checkbox of the setting item 736, the inspection is executed by applying the inspection setting to the pages where the inspection setting has been registered.

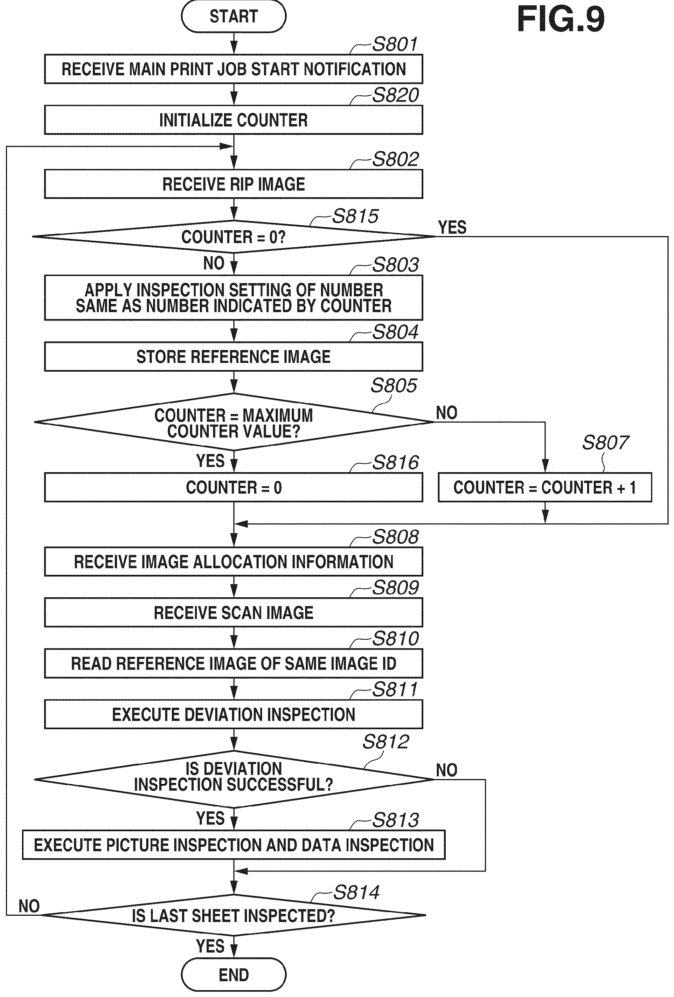

Fig. 9 is a flowchart illustrating characteristic processing in the present embodiment. A program of the inspection apparatus 150 according to the flowchart is stored in the ROM 253 of the inspection apparatus 150, read into the RAM 252, and executed by the CPU 251. A program of the image forming apparatus 100 is stored in the ROM 203 of the image forming apparatus 100, read into the RAM 202, and executed by the CPU 201. A program of the information processing apparatus 140 is stored in the ROM 243 of the information processing apparatus 140, read into the RAM 242, and executed by the CPU 241. Differences from the processing in Fig. 8 will be described.

The information indicating ON/OFF of the setting item 736 is stored in the RAM 252. In step S801 of Fig. 9, in response to receipt of a main print job start notification, the inspection processing control unit 2504 of the inspection apparatus 150 determines whether the information about the setting item 736 stored in the RAM 252 indicates ON or OFF, and executes the processing described in the first embodiment when the setting item 736 is ON. When the setting item 736 is OFF, different processing is executed subsequently.

First, in step S815, the data control unit 2502 determines whether a counter value is zero (0). In a case where the counter value is zero (0) (YES in step S815), the data control unit 2502 advances the processing to step S808 without applying the inspection setting. In step S805, in a case where the data control unit 2502 determines that the counter value is the maximum counter value (YES in step S805), the processing proceeds to step S816. In step S816, the counter value is overwritten with zero (0) and stored in the RAM 252.

By the above-described processing, for example, in a case where the inspection settings are registered only for four pages, the counter value is zero (0) when the fifth page of the RIP images is received. Therefore, the inspection setting is not applied.

According to the present embodiment, since the user can select whether to repeatedly apply the inspection setting, via the inspection setting screen 700, the inspection setting that is appropriate to a job and desired by the user to be inspected is set.

### <Third Embodiment>

In a third embodiment, a job setting in which repetition is not to be performed for a specific page is described. For example, in a case where a job includes a front cover and a back cover in addition to pages with contents in the same layout, such as the VDP job, the user wishes to repeatedly apply an inspection setting to the pages except for the front cover and the back cover. Further, in a case where insert paper is placed in the middle of the job, the user wishes to skip the inspection at the insert paper, e.g. because the insert paper is not treated as deliverables. An inspection setting method appropriate for the above-described job is described. Hereinafter, the third embodiment is described for the portion different from the above-described first and the second embodiments. The portion without detailed description is similar to the portion described in the first and the second embodiments.

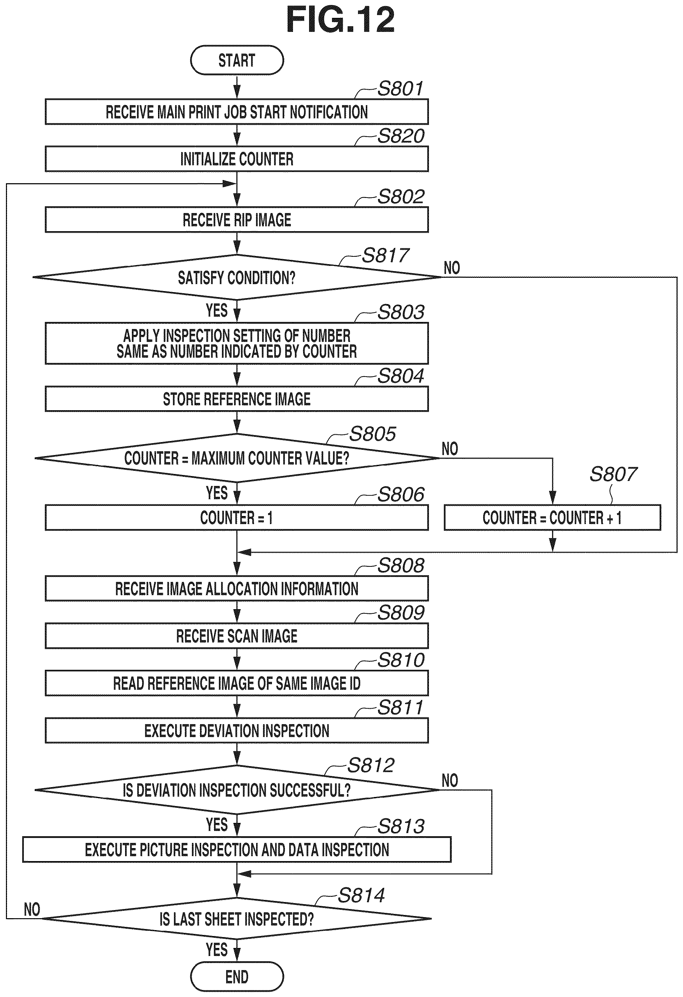

Characteristic processing according to the present embodiment is described with reference to a flowchart illustrated in Fig. 12. Fig. 12 illustrates characteristic processing in the present embodiment. A program of the inspection apparatus 150 according to this flowchart is stored in the ROM 253 of the inspection apparatus 150, read into the RAM 252, and executed by the CPU 251. A program of the image forming apparatus 100 is stored in the ROM 203 of the image forming apparatus 100, read into the RAM 202, and executed by the CPU 201. A program of the information processing apparatus 140 is stored in the ROM 243 of the information processing apparatus 140, read into the RAM 242, and executed by the CPU 241. Herein, differences from the processing in Fig. 9 will be described.

Before application of the inspection setting in step S815 and the subsequent steps, a condition is determined in step S817. An example of the condition that is determined in step S817 is determination of whether the current page falls within an inspection range of pages that has been specified by the user.

Fig. 10B is a diagram illustrating a setting item 737 displayed in the setting area 735. The setting item 737 is an item for specifying a repeating range for the inspection setting. By inputting values in a start page field 738 and an end page field 739 of the setting item 737, the inspection is executed by repeatedly applying the inspection setting with exception of a part of the pages.

The information input in the start page field 738 and the end page field 739 of the setting item 737 is stored in the RAM 252. In step S801 in Fig. 12, in response to receipt of a main print job start notification, the inspection processing control unit 2504 of the inspection apparatus 150 reads the information input in the start page field 738 and the end page field 739 stored in the RAM 252. In step S817, the data control unit 2502 compares the image ID of the RIP image received in step S802, and the information in the start page field 738 and the end page field 739. Then, in a case where a value of the image ID is a value in the start page field 738 or more and also a value in the end page field 739 or less (YES in step S817), the processing proceeds to step S803. In a case where a value of the image ID is less than a value in the start page field 738 or greater than a value in the end page field 739 (NO in step S817), the processing proceeds to step S808.

In a case where an inspection setting is repeatedly applied from the first page when a job includes a front cover and a back cover, a page correspondence is shifted because of presence of the front cover, so that the inspection cannot be executed correctly. Therefore, by the above-described processing, for example, a value in the start page field 738 is set to two (2) and a value of the end page field 739 is set to 101 in a case where an inspection of a job for 102 pages including a front cover and a back cover is executed. In this way, the inspection setting can be repeatedly applied to a range of the second page to the 101st page excluding the front cover and the back cover.

In a case where a back cover is included in a job, or a summary of setting information is printed after the main text is printed through a job, for example, the user may specify how many times the inspection setting is repeatedly applied from the first page.

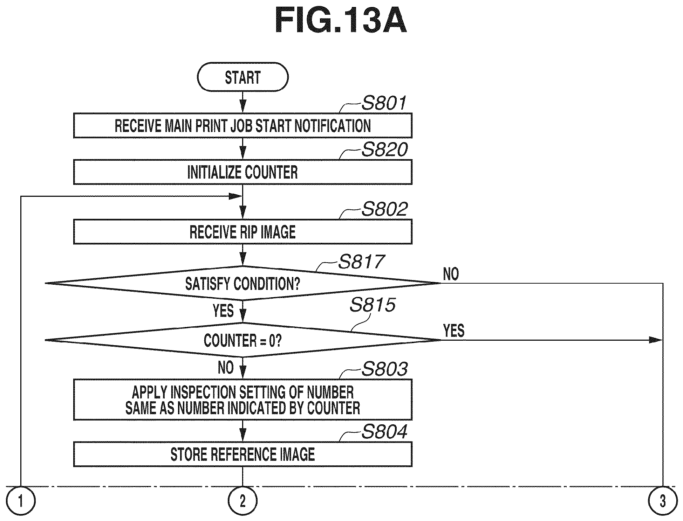

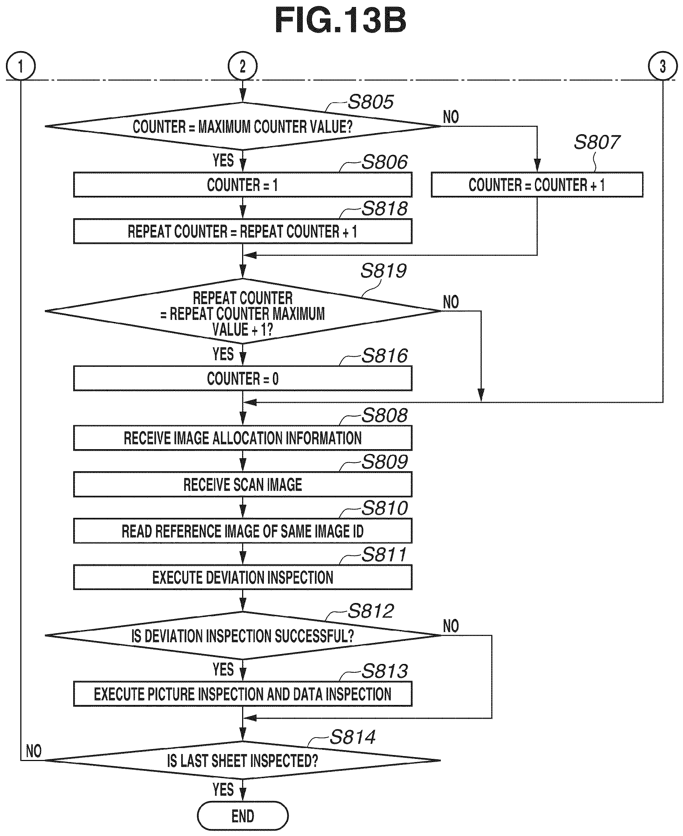

Characteristic processing according to the present embodiment is described with reference to a flowchart in Figs. 13A and 13B. A program of the inspection apparatus 150 according to this flowchart is stored in the ROM 253 of the inspection apparatus 150, read into the RAM 252, and executed by the CPU 251. A program of the image forming apparatus 100 is stored in the ROM 203 of the image forming apparatus 100, read into the RAM 202, and executed by the CPU 201. A program of the information processing apparatus 140 is stored in the ROM 243 of the information processing apparatus 140, read into the RAM 242, and executed by the CPU 241.

Fig. 10C is a diagram illustrating a setting item 740 displayed in the setting area 735. The setting item 740 is an item to set how many times the set inspection setting is repeatedly applied to all the pages included in the job. The inspection setting is repeatedly applied by the number of times corresponding to a value input in a setting item field 741, and the inspection is executed accordingly. A value input in the setting item field 741 is stored in the RAM 252 as a maximum repeat counter value.

In step S801 in Fig. 13A, the inspection processing control unit 2504 of the inspection apparatus 150 receives a main print job start notification and reads a maximum repeat counter value input in the setting item field 741 and stored in the RAM 252, and a value of a repeat counter. First in step S820, the repeat counter is initialized. The repeat counter value indicates the current number of repetitions, and the initial value is one (1). The repeat counter value is stored in the RAM 252.

In step S805, in a case where the data control unit 2502 determines that the counter value is the maximum counter value (YES in step S805), the processing proceeds to step S806. In step S806, the counter value is overwritten with one (1), and stored in the RAM 252. Then, the processing proceeds to step S818. In step S805, in a case where the data control unit 2502 determines that the current counter value is not the maximum counter value (NO in step S805), the processing proceeds to step S807.

In step S818, the data control unit 2502 increments the repeat counter value by one (1) and stores the incremented repeat counter value in the RAM 252 as a new repeat counter value. For example, when the current repeat counter value is three (3), a new repeat counter value is four (4).

Then, the processing proceeds to step S819, and the data control unit 2502 determines whether the current repeat counter value matches a value obtained by adding one (1) to the maximum repeat counter value. For example, when the maximum repeat counter value is 20, the data control unit 2502 determines whether the current counter value is 21. In a case where the repeat counter value is a value obtained by adding one (1) to the maximum repeat counter value (YES in step S819), the processing proceeds to step S816. In step S816, the data control unit 2502 overwrites the repeat counter value with zero (0) and stores the repeat counter value in the RAM 252. In a case where the repeat counter value is not a value obtained by adding one (1) to the maximum repeat counter value (NO in step S819), the processing proceeds to step S808, and the subsequent processing is executed.

By the above-described processing, in a case where the number of repetitions is specified as 20 times when the inspection setting is registered for four pages, for example, the inspection setting is not to be applied after pages where application of the inspection setting to four pages 20 times has been executed. Since the inspection setting is not applied to a back cover to which repeat application of the inspection setting is not applicable, and a sheet describing the summary information printed at the end of the job, a repeating setting excluding the desired pages can be set.

As another example of the condition determined in step S817 of Fig. 12, for example, the data control unit 2502 determines whether a received RIP image is blank-sheet data. In step S817, the data control unit 2502 determines whether the RIP image received in step S802 is blank-sheet data based on the image ID. In a case where the image ID is one (1) or greater, the reference image generation unit 2503 can determine that the received RIP image is not blank-sheet data. Therefore, the processing proceeds to step S803. On the other hand, in a case where the image ID is less than one (1), the received RIP image is determined as blank-sheet data (YES in step S817) because the image ID for a blank sheet is zero (0). Therefore, the processing proceeds to step S808.

Similar to the example described earlier, in a case where insert paper for separating copies is placed in the middle of a job, the repeating setting is shifted if an inspection area is also applied to the insert paper, resulting in incorrect inspection. By the above-described processing, it is possible to repeatedly apply the inspection setting to sheets other than insert paper.

As described above, the setting is effective in a case where the user wishes to repeatedly apply the inspection setting with the exception of some pages. The method is also effective for improving accuracy and user convenience because the user does not have to manually cancel the setting for the page where the user wishes to exclude from the application of the inspection setting.

### <Fourth Embodiment>

In the above-described embodiments, an example case of a job in which the number of pages of the registered inspection setting is the same as the number of pages per record when printing is described. However, there is a VDP job referred to as a page-variable VDP job, which includes a plurality of records with the number of pages variable depending on a record (in the present embodiment, the page-variable VDP job is referred to as a VDP job). In a fourth embodiment, the number of pages included in the VDP job is variable. However, similar to the above-described embodiments, the first page of the first record corresponds to the first page of the second record, and the second page of the first record corresponds to the second page of the second record.

While the inspection setting is registered for six pages, there can be a job (first VDP job) in which six pages are to be printed in one record, and only four pages are to be printed in another record. On the other hand, there can be a job (second VDP job) in which a record desired to be inspected for six pages exists even though the inspection setting is registered for four pages.

For example, as for the first VDP job, the correspondence of the inspection setting is shifted when the inspection setting is repeatedly applied to the fixed number of pages, which results in incorrect inspection. Specifically, when the inspection setting is registered for six pages, and in a case where a record A including four pages and a record B including two pages are printed in sequence, the first page of the record B is compared with the fifth page of the inspection setting, and the second page of the record B is compared with the sixth page of the inspection setting when the record B is inspected.

For example, as for the second VDP job, an inspection error may occur in a sheet with no registered inspection setting, and consequently, printing may be suspended. An inspection setting application method capable of handling a job including records with pages that vary depending on the records is described. The portion without detailed description is similar to the portion described in the first to the third embodiments.

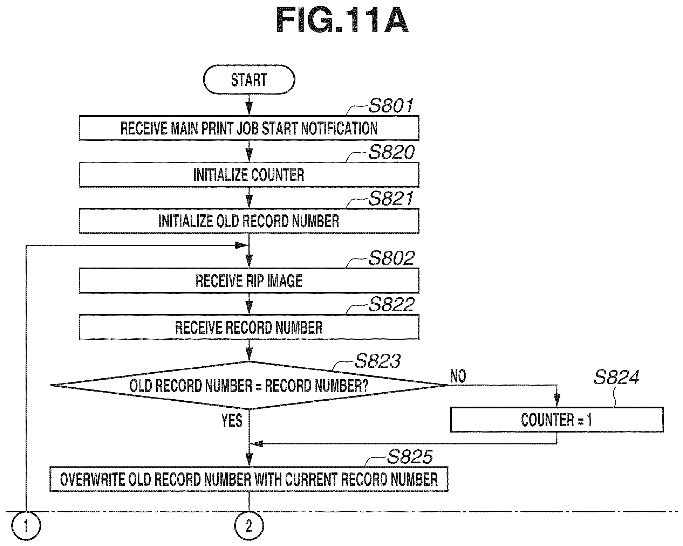

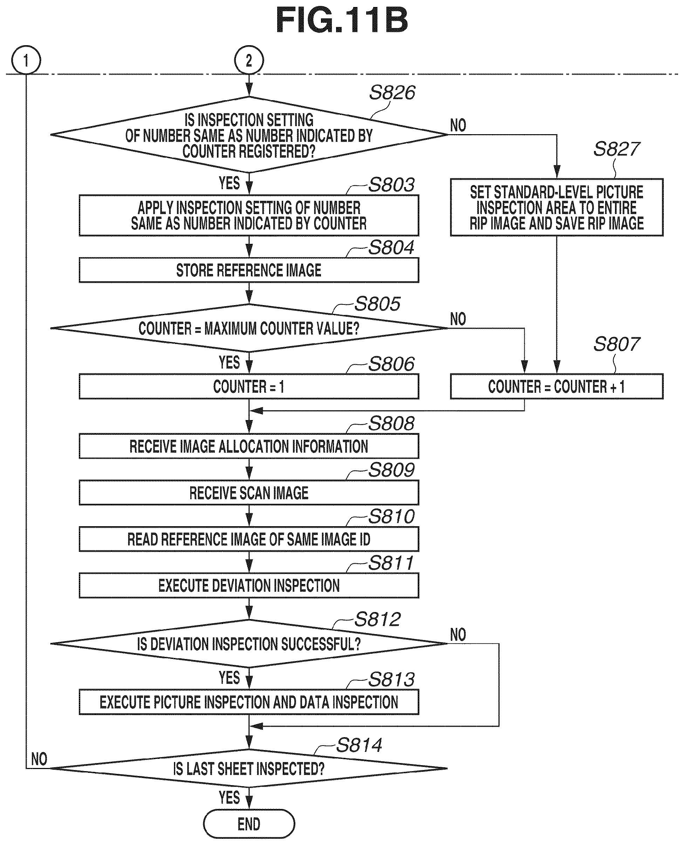

Characteristic processing according to the present embodiment is described with reference to a flowchart illustrated in Figs. 11A and 11B. A program of the inspection apparatus 150 according to this flowchart is stored in the ROM 253 of the inspection apparatus 150, read into the RAM 252, and executed by the CPU 251. A program of the image forming apparatus 100 is stored in the ROM 203 of the image forming apparatus 100, read into the RAM 202, and executed by the CPU 201. A program of the information processing apparatus 140 is stored in the ROM 243 of the information processing apparatus 140, read into the RAM 242, and executed by the CPU 241.

In step S821, the data control unit 2502 initializes the old record number. The old record number is a variable for storing a record number of a page just before the current page, and an initial value of the old record number is one (1). This value is stored in the RAM 252.

In step S822, the data control unit 2502 receives a record number. Next, in step S823, the data control unit 2502 determines whether the record number received in step S822 matches the old record number. In a case where the received record number matches the old record number (YES in step S823), the processing proceeds to step S825. In a case where the received record number does not match the old record number (NO in step S823), the processing proceeds to step S824. In step S824, the data control unit 2502 overwrites the counter value with one (1) and stores the counter value in the RAM 252. Then, the processing proceeds to step S825.

In step S825, the data control unit 2502 overwrites the old record number with the record number received in step S822 and stores the record number in the RAM 252. In step S826, the data control unit 2502 determines whether the inspection setting of a number same as the counter value is registered. In a case where the inspection setting of a number same as the counter value is registered (YES in step S826), the processing proceeds to step S803. In a case where the inspection setting of a number same as the counter value is not registered (NO in step S826), the processing proceeds to step S827.

In step S827, the reference image generation unit 2503 sets a standard-level image inspection to the entire area of the received RIP image and stores the RIP image in the RAM 252 in association with the inspection area.

Further, the processing proceeds to step S807.

By the above-described processing, in a case where the inspection setting is registered for six pages, the inspection setting Nos. 1 to 4 can be applied even if one record under inspection includes only four pages. On the other hand, in a case where a record including six pages is inspected when the inspection setting is registered for only four pages, the inspection setting No. 1 to 4 are applied to the first to the fourth pages, and a standard-level image inspection is set to the entire areas of the fifth and sixth pages. Then, the inspection is executed accordingly. In this way, the inspection can be executed on a page-variable VDP job. Further, even if there is a page with no registered inspection setting, the inspection can continuously be executed without suspension caused by an inspection error.

In the present embodiment, a standard-level image inspection is executed on the entire area of the page in a case where the inspection setting is not registered for the page. However, the inspection may be intentionally suspended when an inspection error is detected, and the user may be prompted to check the inspection setting.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various aspects of the present disclosure are set out in the following numbered clauses:
1. An inspection system that inspects at least two sets of printed products, each set constituting one repeating unit of sheets, the inspection system comprising:
   first setting means for setting inspection areas each corresponding to a different reference image of reference images included in a first reference image group for a first set of the at least two sets of printed products;
   second setting means for setting each of the inspection areas set by the first setting means to a corresponding reference image of reference images included in a second reference image group for a second set of the at least two sets of printed products, the second reference image group having a layout of contents common to the first reference image group and differing in image-related contents; and
   inspection means for comparing, based on the inspection areas, scanned images of the at least two sets of printed products with: the respective reference images of the first reference image group, and the respective reference images of the second reference image group.
2. The inspection system according to clause 1, further comprising inspection setting means for setting whether the second setting means sets the inspection areas to the respective reference images included in the second reference image group of the second set.
3. The inspection system according to any preceding clause, further comprising inspection setting means for setting, in the inspection of the printed products including the at least two sets of printed products, how many times the set inspection areas set by the first setting means are repeatedly set to respective reference images included in different reference image groups.
4. The inspection system according to any preceding clause, further comprising inspection setting means for setting from which page to which page, among reference images of reference image groups corresponding to the at least two sets of printed products, the inspection areas are set.
5. The inspection system according to any preceding clause, further comprising:
   receiving means for receiving print data for generation of the printed products,
   wherein in a case where the print data includes blank-sheet data, the first setting means does not receive a setting of the inspection areas.
6. The inspection system according to any preceding clause, further comprising:
   first receiving means for receiving a number of the reference images included in the first reference image group of the first set;
   second receiving means for receiving a plurality of pieces of image data corresponding to the number of reference images received by the first receiving means; and
   storage means for storing the plurality of pieces of received image data received by the second receiving means as the first reference image group.
7. The inspection system according to any preceding clause, further comprising:
   determination means for determining automatically a number of the reference images included in the first reference image group of the first set;
   second receiving means for receiving a plurality of pieces of image data corresponding to the number of reference images determined by the determination means; and
   storage means for storing the pieces of image data received by the second receiving means as the first reference image group.
8. The inspection system according to any preceding clause 1, further comprising:
   receiving means for receiving a print job for printing printed products,
   wherein the receiving means receives a registration job including image data related to the first reference image group before receiving the print job, and receives the print job in response to completion of the setting of the inspection areas with respect to the first reference image group.
9. The inspection system according to any preceding clause, wherein the first reference image group and the second reference image group are raster-image-processed, RIP, images which have been generated from print data.
10. The inspection system according to any preceding clause,
   wherein the printed products include contents for character recognition or a code, in addition to the image-related contents, and
   wherein the inspection means executes data inspection for inspection of contents of data with respect to the contents for character recognition or a code.
11. The inspection system according to any preceding clause, further comprising:
   image forming means for forming an image on a sheet;
   conveyance means for conveying a sheet on which an image has been formed by the image forming means; and
   image reading means for reading an image formed on the sheet conveyed by the conveyance means.
12. An inspection apparatus for printed products including a plurality of sets of printed products, each set constituting one repeating unit of sheets, and among the plurality of sets of printed products, a layout of contents being common and image-related contents being different from each other, the inspection apparatus comprising:
   registration means for registering a reference image;
   receiving means for receiving an inspection area for the reference image;
   setting means for setting the received inspection area; and
   inspection means for comparing the printed products and the reference image based on the inspection area,
   wherein the receiving means receives inspection areas corresponding to one set with respect to reference images corresponding to one set, and
   wherein the setting means repeatedly sets the inspection areas corresponding to the one set to reference images corresponding to each remaining set of a plurality of reference images including the reference images corresponding to the one set.
13. The inspection apparatus according to clause 12, further comprising inspection setting means for setting whether to repeatedly set the inspection areas to reference images corresponding to each of the remaining sets of the plurality of reference images.
14. The inspection apparatus according to any of clauses 12 to 13, further comprising inspection setting means for setting, in the inspection of the printed products including the plurality of sets of printed products, how many times the inspection areas set by the setting means are repeatedly set to the reference images corresponding to each of the remaining sets.
15. The inspection apparatus according to any of clauses 12 to 14, further comprising inspection setting means for setting from which page to which page, among reference images of the plurality of reference images, the inspection areas are set.
16. The inspection apparatus according to any of clauses 12 to 15, further comprising:
   receiving means for receiving image data,
   wherein in a case where the image data includes blank-sheet data, the setting means does not receive a setting of the inspection areas.
17. The inspection apparatus according to any of clauses 12 to 16, further comprising:
   first receiving means for receiving a number of the reference images corresponding to the one set;
   second receiving means for receiving a plurality of pieces of image data corresponding to the number of reference images received by the first receiving means; and
   storage means for storing the plurality of pieces of image data received by the second receiving means as reference images corresponding to the one set.
18. The inspection apparatus according to any of clauses 12 to 17, further comprising:
   determination means for determining automatically a number of the reference images corresponding to the one set;
   second receiving means for receiving a plurality of pieces of image data corresponding to the number of reference images determined by the determination means; and
   storage means for storing the image data received by the second receiving means as reference images corresponding to the one set.
19. The inspection apparatus according to any of clauses 12 to 18, wherein the reference images are raster-image-processed, RIP, images which have been generated from print data.
20. The inspection apparatus according to any of clauses 12 to 19,
   wherein the printed products include contents for character recognition or a code, in addition to the image-related contents, and
   wherein the inspection means executes data inspection for inspection of contents of data with respect to the contents for character recognition or a code.
21. The inspection system according to any of clauses 1 to 11, further comprising: a generation means configured to generate the at least two sets of printed products.
22. The inspection system of any of clauses 1 to 11, or 21,
   wherein the inspection means comprises the inspection apparatus of any of clauses 12 to 21.

Various embodiments have been described in detail above but it will be understood that the present disclosure is not limited to these embodiments and encompasses all modifications, variants, alternatives and equivalents falling within the scope of the appended claims.

## Claims

1. An inspection system that inspects at least two sets of printed products, each set constituting one repeating unit of sheets, the inspection system comprising:
first setting means for setting inspection areas (706, 707, 708, 709) each corresponding to a different reference image of reference images included in a first reference image group for a first set of the at least two sets of printed products;
second setting means for setting each of the inspection areas (706, 707, 708, 709) set by the first setting means to a corresponding reference image of reference images included in a second reference image group for a second set of the at least two sets of printed products, the second reference image group having a layout of contents common to the first reference image group and differing in image-related contents; and
inspection means (150) for comparing, based on the inspection areas (706, 707, 708, 709), scanned images of the at least two sets of printed products with: the respective reference images of the first reference image group, and the respective reference images of the second reference image group.

2. The inspection system according to claim 1, further comprising inspection setting means for setting whether the second setting means sets the inspection areas (706, 707, 708, 709) to the respective reference images included in the second reference image group of the second set.

3. The inspection system according to any preceding claim, further comprising inspection setting means for setting, in the inspection of the printed products including the at least two sets of printed products, how many times the set inspection areas (706, 707, 708, 709) set by the first setting means are repeatedly set to respective reference images included in different reference image groups.

4. The inspection system according to any preceding claim, further comprising inspection setting means for setting from which page to which page, among reference images of reference image groups corresponding to the at least two sets of printed products, the inspection areas (706, 707, 708, 709) are set.

5. The inspection system according to any preceding claim, further comprising:
receiving means for receiving print data for generation of the printed products,
wherein in a case where the print data includes blank-sheet data, the first setting means does not receive a setting of the inspection areas (706, 707, 708, 709).

6. The inspection system according to any preceding claim, further comprising:
first receiving means for receiving a number of the reference images included in the first reference image group of the first set;
second receiving means for receiving a plurality of pieces of image data corresponding to the number of reference images received by the first receiving means; and
storage means for storing the plurality of pieces of received image data received by the second receiving means as the first reference image group.

7. The inspection system according to any preceding claim, further comprising:
determination means for determining automatically a number of the reference images included in the first reference image group of the first set;
second receiving means for receiving a plurality of pieces of image data corresponding to the number of reference images determined by the determination means; and
storage means for storing the pieces of image data received by the second receiving means as the first reference image group.

8. The inspection system according to any preceding claim 1, further comprising:
receiving means for receiving a print job for printing printed products,
wherein the receiving means receives a registration job including image data related to the first reference image group before receiving the print job, and receives the print job in response to completion of the setting of the inspection areas (706, 707, 708, 709) with respect to the first reference image group.

9. The inspection system according to any preceding claim, wherein the first reference image group and the second reference image group are raster-image-processed, RIP, images which have been generated from print data.

10. The inspection system according to any preceding claim,
wherein the printed products include contents for character recognition or a code, in addition to the image-related contents, and
wherein the inspection means (150) executes data inspection for inspection of contents of data with respect to the contents for character recognition or a code.

11. The inspection system according to any preceding claim, further comprising:
image forming means for forming an image on a sheet;
conveyance means for conveying a sheet on which an image has been formed by the image forming means; and
image reading means for reading an image formed on the sheet conveyed by the conveyance means.
